# EUROPÄISCHE PATENTSCHRIFT

(11) **EP 0 555 687 B1**
(45) Veröffentlichungstag und Bekanntmachung des Hinweises auf die Patenterteilung: **03.04.1996**
(21) Anmeldenummer: 93101165.4
(22) Anmeldetag: 27.01.1993
(51) Int. Cl.: H02G 3/04, H02G 3/26

(54) **Kabelkanal zur Aufnahme von Kabelbündel**
Cable raceway for a cable bundle
Canal pour câbles destiné à contenir un faisceau de câbles

(30) Priorität: 13.02.1992 DE 4204187
(43) Veröffentlichungstag der Anmeldung: 18.08.1993
(73) Patentinhaber: A. Raymond GmbH & Co. KG, D-79539 Lörrach (DE)
(72) Erfinder: Lesser, Hans-Jürgen, Dr., W-7888 Rheinfelden (DE); Raymond, Antoine, W-7850 Lörrach (DE)
(74) Vertreter: Kirchgaesser, Johannes, Dipl.-Ing.

(56) Entgegenhaltungen:
- AU-B- 408 621
- DE-A- 3 815 749
- DE-A- 3 935 628

## Beschreibung

Die Erfindung bezieht sich auf einen Kabelkanal, welcher insbesondere im Kraftfahrzeugbau zur Aufnahme von Kabelbündel verwendet wird. Der Kabelkanal besteht üblicherweise aus einer Bodenplatte mit zwei Rinnenwänden und mehreren, am oberen Rand einer Rinnenwand schwenkbar angeformten Abdeckbügeln, deren freie Enden mit Rastmitteln versehen sind, welche beim Schließen der Bügel mit entsprechenden Rastmitteln an der gegenüberliegenden Rinnenwand verbindbar sind.

Dieser Kabelkanal wird in hierfür vorgesehene Vertiefungen in dem Karosserie- oder Bodenblech eingelegt und dort in bekannter Weise befestigt. In diesem Kanal werden die Kabelleitungen hineinverlegt, wobei das zu haltende Kabelbündel über die Länge des Kabelkanals unterschiedlich groß sein kann, je nachdem, wieviel der verlegten Kabelleitungen zu den Verbraucherstellen bereits weggeführt sind.

Der Kabelkanal hat einen abgeflachten oder länglichen Querschnitt, welcher mit einer gewissen Platzreserve auf die größte Anzahl der aufzunehmenden Kabelleitungen ausgelegt wird. So kommt es, daß die eingelegten Kabelleitungen mehr oder weniger locker im Kanal liegen und während der Fahrt infolge der auftretenden Erschütterungen klappernde Geräusche verursachen.

Aus der DE 39 35 628 A1 ist bereits ein Kabelkanal bekannt, bei welchem zur Vermeidung derartiger klappernder Geräusche den Rinnenraum umfassende Kabelbänder vorgesehen sind, welche mit dem rinnenförmigen Grundkörper im Bereich der gegenüberliegenden Rinnenwand verbindbar sind. Hierdurch lassen sich zwar die eingelegten Kabelleitungen nachträglich noch bündeln, doch müssen dazu mehrere Kabelbänder in freie Zwischenräume des Kabelkanals eingeführt und die Bandenden in die Schlösser eingefädelt werden, was mit einem erheblichen Zeitaufwand verbunden ist.

Um das Geräuschproblem einfacher und montagefreundlicher zu lösen, wird erfindungsgemäß vorgeschlagen, die den Rinnenraum umfassenden Kabelbänder jeweils im Bereich der Bügel so anzuordnen, daß diese beim Schließen der Bügel an ihrem freien Ende von den Bügeln auf an dem oberen Rand der gegenüberliegenden Rinnewand (4) angeordneten Kabelbandverschlüßen (15) gedrückt werden und mit diesen zusammenwirken. Hierdurch ist es möglich, nach dem Einlegen der Kabel leitungen und Schließen der Bügel durch bloßes Ziehen am vorstehenden Ende des Kabelbandes die Leitungen im Rinnenkörper zu einem straffen Bündel zusammenzuziehen und so vor erschütterungsbedingten Klappergeräuschen zu bewahren.

Das Zusammenwirken des Kabelbandes mit dem Kabelbandschloß läßt sich nach einer Weiterbildung der Erfindung auf einfache Weise so gestalten, daß das Kabelband mit sägezahnförmigen Rastzacken versehen wird, welche beim Schließen des Bügels mit einem am oberen Rand der Rinnenwand angeordneten Rastzacken zusammenwirken, und zwar derart, daß diese Kabelbänder mit ihren Zacken in Schließrichtung durchziehbar sind. Hierbei können die Rastzacken des Kabelbandes sowohl zum oder weg vom Kabelbündel als auch parallel zum Kabelbündel gerichtet sein. Wichtig ist nur, daß die zugehörige Rasteinrichtung mit entsprechend angeordneten und ausgerichteten Rastfingern oder Rastzacken versehen ist.

Eine besonders einfache und zugleich wirkungsvolle Bündelung der Kabelleitungen läßt sich dadurch erreichen, daß jeder Büget mit zwei die Rinnewand übergreifenden, zum Rinnenboden hin abgewinkelten Rastlappen versehen ist und das Kabelband zwischen diesen Rastlappen hindurchgeführt wird, und daß ferner zwischen den Rastnasen jeweils ein weiterer Rastzacken an der Rinnenwand angeformt ist, welcher mit den gegenüberliegenden Rastzacken im geschlossenen Zustand des Bügels zusammenwirkt.

In der Zeichnung sind mehrere Ausführungsformen der Erfindung dargestellt und sollen nachfolgend näher erläutert werden. Es zeigt:
- Fig. 1: einen Ausschnitt des erfindungsgemäßen Kabelkanals mit integrierten Kabelbändern,
- Fig. 2: die Befestigung des Kabelbandes im Rinnenboden in einem vergrößerten Teilschnitt,
- Fig. 3: den montierten Kabelkanal im Schnitt beim Einfüllen der Kabelleitungen,
- Fig. 4: die gleiche Montagesituation mit lockerer Kabelfüllung nach dem Schließen der Abdeckbügel,
- Fig. 5: die gleiche Montagesituation nach dem Anziehen der Kabelbänder,
- Fig. 6: den gleichen Kabelkanalausschnitt mit integrierten Kabelbändern, jedoch mit einer anderen Ausbildung des Kabelbandverschlusses,
- Fig. 7: eine Vorderansicht des mit Kabelleitungen gefüllten und geschlossenen Kabelkanals mit Blick auf das Kabelbandschloß,
- Fig. 8: den gleichen mit Kabelleitungen gefüllten und geschlossenen Kabelkanal mit gespanntem Kabelband im Schnitt gemäß Linie VIII - VIII in Figur 7 und
- Fig. 9: eine weitere Ausführungsform des Kabelkanals mit einstückig eingeformten Kabelbändern.

Der in den Figuren dargestellte Kabelkanal besteht aus einem üblicherweise aus Kunststoff hergestellten, rinnenförmigen Grundkörper 1 mit einer Bodenplatte 2 und zwei Rinnenwänden 3 und 4 sowie aus mehreren an einer Rinnenwand 3 am oberen Rand 5 schwenkbar angeformten Abdeckbügeln 6. Diese sind an ihren freien Enden mit Rastmitteln 7 versehen, welche mit entsprechenden Rastmitteln oder -nasen 8 an der gegenüberliegenden Rinnenwand 4 verbindbar sind.

Die Rastmittel 7 werden im vorliegenden Ausführungsbeispiel durch rechteckige Aussparungen 9 in zwei Lappen 10 gebildet, welche am freien Ende der Abdeckbügel 6 etwa im rechten Winkel angeformt sind und nach dem Schließen des Abdeckbügels 6 die gegenüberliegende Rinnenwand 4 übergreifen. Dabei gleiten die Lappen 10 über die an der Außenseite der Rinnenwand 4 angeformten Rastnasen 8, bis diese in die Aussparungen 9 einrasten.

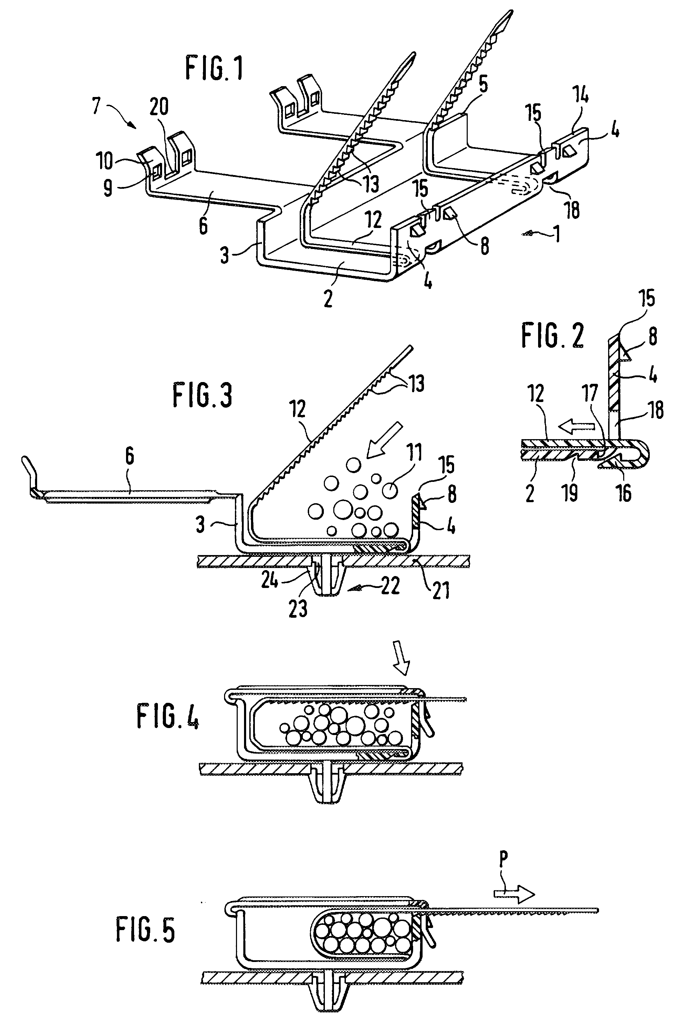

Um die in den Kabelkanal zu verlegenden Kabelleitungen 11 zueinander und zum Kanal festzulegen, sind jeweils im Bereich der Bügel 6 den Rinnenraum umfassende Kabelbänder 12 vorgesehen, welche mit dem Rinnenkörper 1 im Bereich der Rinnenwand 4 verbunden und mit einer großen Anzahl sägezahnförmiger Rastzacken 13 versehen sind. Zur Verbindung der Kabelbänder 12 mit dem Rinnenboden 2 sind die Bänder im vorliegenden Ausführungsbeispiel an ihren Enden umgebogen und mit einem Haken 16 versehen, der um die Kante 17 einer Aussparung 18 in dem Rinnenboden 2 gelegt wird und dort in einer Kerbe 19 einrastet (Fig. 2).

Der obere Rand 14 der Rinnenwand 4 ist im Bereich zwischen den Rastnasen 8 nach innen abgeschrägt, so daß dort ein Rastzacken 15 gebildet wird. Auf diesen wird das Kabelband 12 beim Schließen des Bügels 6 angedrückt, wobei das Band 12 zuvor in den von zwei Rastlappen 10 gebildeten Zwischenraum eintritt und dann von der Abschlußkante 20 des Zwischenraums auf seiner Rückseite abgestützt wird.

Das erfindungsgemäße Vorgehen beim Verlegen der Kabelleitungen 11 soll nun anhand der Figuren 3 bis 5 erläutert werden:

Der Kabelkanal wird zunächst auf dem hierfür vorgesehenen Bodenblech 21 eines Kraftfahrzeuges montiert. Zu diesem Zweck ist die Bodenplatte 2 an ihrer Unterseite mit einem gängigen Verankerungsfuß 22 versehen, welcher in ein Loch 23 des Bodenblechs 21 eingesteckt und mittels Spreizbeine 24 verankert wird (Fig. 3).

Nach dem Einlegen der Kabelleitungen 11 werden sodann die Bügel 6 zugeklappt, wobei die Rastnasen 8 in die Aussparungen 9 der Lappen 10 einrasten. Hierbei schieben sich die Kabelbänder 12 mit ihren Enden in die Zwischenräume zwischen den Lappen 10 und werden von den Abschlußkanten 20 genau auf die Rastzacken 15 gedrückt (Fig. 4).

Wenn alle Bügel 6 geschlossen sind, werden zum Schluß die Kabelbänder 12 in Richtung des Pfeiles "P" durch die Zwischenräume hindurchgezogen, wobei die Rastzacken 15 und auch die Kanten 20 der Bügel 6 über dem Kabelband 12 elastisch etwas nachgeben. Es wird dann solange gezogen, bis die Kabelleitungen 12 eng gebündelt sind (Fig. 5). Auf diese Weise wird verhindert, daß die Kabelleitungen 12 lose im Kanal hin- und herfliegen und dabei unerwünschte Geräusche verursachen.

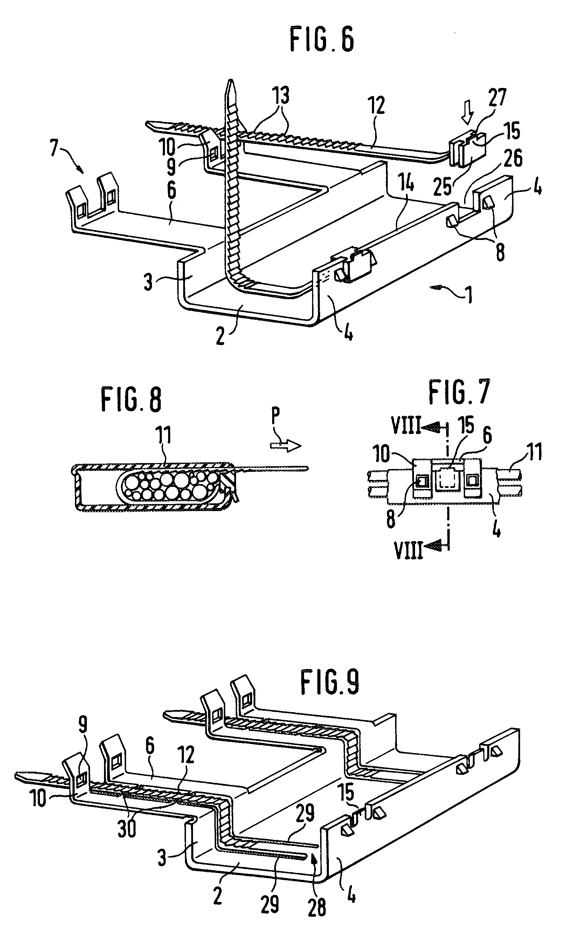

Figur 6 zeigt den gleichen Kabelkanalausschnitt wie Figur 1, jedoch mit einer anderen Ausbildung des Kabelbandverschlusses. Das Kabelband 12 ist in diesem Fall mit einem sich quer zur Bandrichtung erstreckenden Verschlußkörper 25 einstückig verbunden, welcher in einer Aussparung 26 der Rinnenwand 4 zwischen den Rastnasen 8 festlegbar ist. Der Verschlußkörper 25 ist zu diesem Zweck an den in der Rinnenwand 4 versenkbaren Seiten jeweils mit einer Nut 27 versehen, welche der Wandstärke der Rinnenwand 4 angepaßt ist. An der vierten, nach oben weisenden Seite ist die mit den Kabelbandzacken 13 zusammenwirkende Rastzacke 15 angeformt, welche im links dargestellten, eingebauten Zustand des Verschlußkörpers 25 etwa in Höhe der Rinnenkante 14 angeordnet ist.

Diese Ausführungsform bietet gegenüber der erstgenannten den Vorteil, daß die Mittel zur Befestigung des Kabelbandes 12 und der Kabelbandverschluß an einer einzigen Stelle im Verschlußkörper 25 vereinigt sind, so daß im Kabelkanal lediglich die Aussparung 26 in der Rinnenwand 4 eingeformt werden muß.

Eine weitere Ausführungsform des erfindungsgemäßen Kabelkanals ist in Figur 9 dargestellt. Hierbei sind die im wesentlichen gleich ausgebildeten Kabelbänder 12 an ihrem Anfang 28 mit dem Rinnenboden 2 einstückig verbunden und im Boden 2, in der Rinnenwand 3 und im Abdeckbügel 6 derart eingeformt, daß sie von diesen Teilen des Kabelkanals beiderseits durch Schlitze 29 getrennt und nur durch schmale, abreißbare Stege 30 mit dem Grundkörper 1 und dem Bügel 6 verbunden sind. Der Abdeckbügel 6 ist ansonsten gleich ausgebildet wie bei den vorbeschriebenen Kabelkanälen und wird auch gleichermaßen nach dem Einlegen der Kabelleitungen 11 geschlossen.

Zum Bündeln der Leitungen 11 braucht dann nur am Ende des Kabelbandes 12 kräftig gezogen zu werden, so daß die Verbindungsstege 30 abreißen und das Band 12 zwischen dem Bügel 6 und der Rastzacke 15 hindurchgleitet, bis die Kabelleitungen 11 eng aneinanderliegen.

Diese Ausführungsform spart das separate Abspritzen und anschließende Einsetzen der Kabelbänder und wird somit bei gleicher Funktion und gleicher Bedienungsfreundlichkeit billiger in der Herstellung sein als die vorgenannten Kabelkanal-Ausführungen.

Es versteht sich, daß die vorliegende Integration eines Kabelbandes in einem Kabelkanal auch bei Kabelschellen anwendbar ist, wenn dort die Forderung nach einer erschütterungsfreien Einlagerung von Kabelbündeln erhoben wird und die üblicherweise hierfür an der Innenwand der Schelle angeformten Federarme diese Forderung nicht befriedigend erfüllen.

## Patentansprüche

1. Kabelkanal zur Aufnahme von Kabelbündel unterschiedlicher Größe, bestehend aus einem auf einem Träger verankerbaren Grundkörper (1) mit einer Bodenplatte (2) und zwei Rinnenwänden (3 und 4) und mehreren, am oberen Rand (5) einer Rinnenwand (3) schwenkbar angeformten Abdeckbügeln (6), deren freie Enden mit Rastmitteln (7) versehen sind, welche beim Schließen der Bügel (6) mit entsprechenden Rastmitteln (8) an der gegenüberliegenden Rinnenwand (4) verbindbar sind, wobei den Rinnenraum umfassende Kabelbänder (12) vorgesehen sind, welche mit dem rinnenförmigen Grundkörper (1) im Bereich der gegenüberliegenden Rinnenwand (4) verbindbar sind,
**dadurch gekennzeichnet,** daß
die Kabelbänder (12) jeweils im Bereich der Abdeckbügel (6) so angeordnet sind, daß diese beim Schließen der Bügel (6) an ihrem freien Ende von den Bügeln auf an dem oberen Rand der gegenüberliegenden Rinnenwand (4) angeordneten Kabelbandverschlüßen (15) gedrückt werden und mit diesen zusammenwirken.

2. Kabelkanal nach Anspruch 1, **dadurch gekennzeichnet,**
daß das Kabelband (12) mit sägezahnförmigen Rastzacken (13) versehen ist, welche beim Schließen des Bügels (6) mit einem am oberen Rand (14) der Rinnenwand (4) angeordneten Rastzacken (15) zusammenwirken, so daß die Kabelbänder (12) in Schließrichtung (p) durchziehbar sind.

3. Kabelkanal nach Anspruch 2, dadurch gekennzeichnet,
daß jeder Bügel (6) mit zwei die Rinnenwand (4) übergreifenden, zum Rinnenboden (2) hin abgewinkelten Rastlappen (10) versehen ist und das Kabelband (12) zwischen diesen Rastlappen (10) hindurchgeführt wird, und daß ferner zwischen den Rastnasen (8) jeweils ein weiterer Rastzacken (15) an der Rinnenwand (4) angeformt ist, welcher mit den gegenüberliegenden Rastzacken (13) des Kabelbandes (12) im geschlossenen Zustand des Bügels (6) zusammenwirkt.

4. Kabelkanal nach Anspruch 1, dadurch gekennzeichnet,
daß die Kabelbänder (12) an ihrem Anfang (28) mit dem Rinnenboden (2) einstückig verbunden und im Boden (2), in der Rinnenwand (3) und im Abdeckbügel (6) derart angeformt sind, daß sie von diesen Teilen des Kabelkanals beiderseits durch Schlitze (29) getrennt und nur durch schmale, abreißbare Stege (30) mit dem Grundkörper (1) und dem Bügel (6) verbunden sind.

## Claims

1. A cable duct for receiving cable bunches of different sizes, comprising a main body (1) which can be anchored on a carrier and which has a bottom plate (2) and two channel walls (3 and 4) and a plurality of cover clip portions (6) which are pivotably formed on the upper edge (5) of a channel wall (3) and whose free ends are provided with retaining means (7) which, when the clip portions (6) are closed, can be connected to corresponding retaining means (8) on the oppositely disposed channel wall (4), wherein there are provided cable ties (12) which embrace the space in the channel and which can be connected to the channel-shaped main body (1) in the region of the oppositely disposed channel wall (4), characterised in that the cable ties (12) are respectively arranged in the region of the cover clip portions (6) in such a way that when the clip portions (6) are closed the cable ties are pressed at their free ends by the clip portions on to the cable tie fasteners (15) arranged at the upper edge of the oppositely disposed channel wall (4) and co-operate with said cable tie fasteners.

2. A cable duct according to claim 1 characterised in that the cable tie (12) is provided with sawtooth-shaped retaining projections (13) which, when the clip portion (6) is closed, co-operate with a retaining projection (15) arranged at the upper edge (14) of the channel wall (4) so that the cable ties (12) can be pulled through in the closing direction (p).

3. A cable duct according to claim 2 characterised in that each clip portion (6) is provided with two retaining tabs (10) which engage over the channel wall (4) and which are angled towards the channel bottom (2) and the cable tie (12) is passed through between said retaining tabs (10), and that in addition formed on the channel wall (4) between the retaining noses (8) is a respective further retaining projection (15) which co-operates with the oppositely disposed retaining projections (13) of the cable tie (12) in the closed condition of the clip portion (6).

4. A cable duct according to claim 1 characterised in that the cable ties (12) are integrally joined at their beginning (28) to the channel bottom (2) and are formed in the bottom (2), in the channel wall (3) and in the cover clip portion (6) in such a way that they are separated from those parts of the cable duct on both sides by slots (29) and are connected to the main body (1) and the clip portion (6) only by narrow web portions (30) which can be torn away.

## Revendications

1. Canalisation pour câbles destiné à assurer l'acheminement de faisceaux de câbles de différents diamètres, se composant d'une embase (1) constituée d'un fond (2) et de deux parois latérales formant goulotte (3 et 4) et de plusieurs étriers de recouvrement rabattables (6) réalisés solidaires par formage de la partie supérieure (5) d'une des deux parois latérales formant goulotte (3), dont les extrémités libres sont munies d'éléments d'encastrement (7) qui, lors du rabattement des étriers (6) viennent s'accrocher dans des éléments d'encastrement antagonistes (8) ménagés en correspondance dans la paroi latérale formant goulotte opposée (4), des serre-câbles (12) étant en l'occurrence prévus pour enserrer le gabarit de passage intérieur de la goulotte, serre-câbles qui peuvent être reliés avec l'embase en forme de goulotte (1) au niveau de la paroi latérale formant goulotte (4) opposée, **se caractérisant par le fait** que les serre-câbles (12) sont respectivement disposés, au niveau des étriers de recouvrement (6), dans des conditions telles que lors du rabattement de ces étriers (6) ils sont, au niveau de leurs extrémités libres, appliqués par pression sur les éléments de verrouillage (15) qui sont disposés sur le bord supérieur de la paroi latérale formant goulotte (4) et réalisent avec ceux-ci une interaction d'encastrement.

2. Canalisation pour câbles suivant la revendication 1, se caractérisant par le fait que le serre-câbles (12) est muni d'une série de crans d'accrochage en forme de dents de scie (13) qui, lors du rabattement de l'étrier (6) en position de fermeture, viennent s'encliqueter avec un cran d'accrochage (15) disposé à la partie supérieure (14) de la paroi latérale formant goulotte (4) dans des conditions telles que l'on peut tirer sur le serre-câbles (12) dans le sens de sa fermeture "P".

3. Canalisation pour câbles suivant la revendication 2, se caractérisant par le fait que chaque étrier (6) est muni de deux languettes d'accrochage (10) repliées en forme de U en direction du fond de la goulotte (2) qui viennent recouvrir la paroi latérale formant goulotte (4) et par le fait que le serre-câbles (12) passe entre ces languettes d'accrochage (10) et qu'il se trouve respectivement par ailleurs, entre les ergots d'accrochage (8), un autre cran d'accrochage (15) rendu solidaire par formage de la paroi latérale formant goulotte (4), qui réalise une interaction d'encastrement avec le cran d'accrochage (13) du serre-câbles (12) lorsque l'étrier (6) est fermé.

4. Canalisation pour câbles suivant la revendication 1, se caractérisant par le fait que les serre-câbles (12) sont, au niveau de leur début (28) rendus solidaires du fond de la goulotte (2) par réalisation monobloc et sont rendus solidaires par formage du fond (2), de la paroi latérale formant goulotte (3) et de l'étrier de recouvrement (6) dans des conditions telles qu'ils sont séparés sur leurs deux côtés de ces éléments de la canalisation pour câbles par des fentes (29) et ne sont reliés à l'embase (1) et à l'étrier (6) que par l'intermédiaire de barrettes entretoises de section réduite à rupture par arrachement (30).
